# EUROPEAN PATENT APPLICATION

(11) **EP 2 484 640 A1**
(43) Date of publication of application: **08.08.2012**
(21) Application number: 09849647.4
(22) Date of filing: 18.11.2009
(51) Int. Cl.: C02F 11/12, A61L 2/10, A61L 2/20, A61L 2/18, A61L 101/10, A61L 101/06

(54) **METHOD AND APPARATUS FOR AEROBICALLY AIR-DRYING SLUDGE FILTER CAKES**

(30) Priority: 28.09.2009 CN 200910192763
(71) Applicant: Guangzhou Pude Environmental Protection Equipment Ltd., Guangzhou, Guangdong 510220 (CN)
(72) Inventor: ZHONG, Huansheng, Guangdong 510220 (CN); WU, Xuewei, Guangdong 510220 (CN); WU, Jiacong, Guangdong 510220 (CN); SUN, Zhimin, Guangdong 510220 (CN); YANG, Haiying, Guangdong 510220 (CN)
(74) Representative: Lillegraven, Rita
(86) International application number: PCT/CN2009/001279
(87) International publication number: WO 2011/035459

(57) **Abstract**

A method for aerobically air-drying sludge cakes is provided. The method comprises: crushing and dispersing sludge filter cakes into a layer of sludge granules, blowing with positive pressure dry air into the layer of sludge granules moving at low speed or overturned so that the sludge granules experience aerobically exothermic reactions, which make moisture rapidly evaporate from sludge granules and moved to the dry air by mass transferring under the effect of both the external heat and internal heat, physically or chemically sterilizing the sludge granules moving at low speed or overturned, pumping out tail gas by negative pressure from the layer of sludge granules, washing and then discharging, and further pulverizing the dried sludge granules to reach the reclamation requirements. At the same time, an apparatus for carrying out the method is also provided. The method is high in heat conducting and mass transferring efficiency when drying and low in energy consumption for drying. It accelerates the drying speed. The sludge granules can be stably and safely processed during the drying. In addition, the dried tail gas can meet the environment-friendly discharge standard, and the output sludge is good for sludge reclamation.

## Description

### Technical Field

This invention belongs to the field of sludge treatment technology, more particularly, to a method and apparatus for aerobically air-drying sludge filter cakes wherein the drying of the sludge is operated by taking advantage of the combination of external energy and internal heat of the sludge.

### Background Art

Sewage treatment creates sludge in large amounts. To reclaim the sludge, sludge filter cakes produced from mechanically dewatering should be subjected to further drying treatment.

Up to now, the commonly used method for drying sludge filter cakes is drying with warm air, in which moisture in the sludge is rapidly evaporated by directly or indirectly raising the temperature of sludge per se with air at medium and high temperature. But, such method has the following five disadvantages: 1. It leads to high energy consumption in the sludge drying process. 2. It is difficult to deal with tail gases from the sludge drying process. 3. It requires a substantial investment for the apparatus. 4. The apparatus has terrible operation stability. 5. There is a fair possibility of dust explosions.

### Summary of the Invention

An object of the present invention is to overcome the deficiencies of the above mentioned treatment of sludge filter cakes by providing a method for low temperature air-drying sludge filter cakes which has lower energy consumption, less pollution from tail gases, smaller apparatus investment, more stable operation and higher safety.

The invention embodies as a method for low temperature drying sludge filter cakes including steps of:
(1) crushing and dispersing the sludge filter cakes into a layer of sludge granules to enlarge the specific surface area of the sludge,
(2) blowing with positive pressure dry air at a certain temperature into the layer of sludge granules moving at low speed or overturned so that the sludge granules experience aerobically exothermic reactions, which make moisture rapidly evaporated from sludge granules and moved to the dry air by mass transferring under the effect of both the external heat and internal heat,
(3) physically or chemically sterilizing the sludge granules moving at low speed or overturned,
(4) pumping out tail gas by negative pressure from the layer of sludge granules, washing and then discharging, and
(5) further pulverizing the dried sludge granules during the conveying of the dried sludge granules with a screw crushing device by making the materials crushing and rubbing with each other to reach the reclamation requirement for use as fertilizers, in bricks manufacture, as fuels and as fillers.

The above crushing and dispersing of the sludge filter cakes is accomplished by overturning the sludge filter cakes with a moisture content of 50% to 70% in a porous or interstitial cage and crushing the sludge filter cakes via the attrition and collision therebetween. The sludge granules with external diameters less than those of the pore or the gap distances of the cage breakthrough the cage and thereby the step of the crushing and dispersing of sludge filter cakes is accomplished. The diameters of the pore or the gap distances are set between 3mm and 30mm. The resulting sludge granules within the range, when free settled, have a relatively small bulk density, which may facilitate the gas in and out. The overturning of sludge filter cakes in the cage may be driven by the screw inside the cage or the rotation of the cage per se. The speed of overturning sludge filter cakes in the cage is adjusted according to moisture content of sludge filter cakes and output remand according to the following regulars: ○ ,1. The higher moisture content of sludge filter cakes is, the lower the overturning speed is, and vice versa. The most importance is to minimize the destruction of the capillary channels already formed inside the sludge filter cakes by shear stress, so as to keep sludge granules in a relatively loose state and having larger specific surface area to benefit the subsequent aerobically air-drying process. ○ ,2. The higher the overturning speed is, the more output the sludge crushing and dispersing apparatus has, and vice versa. Preferably, the overturning speed during the crushing and dispersing of sludge filter cakes is that the linear velocity at the outermost radial point is between 5mm/s and 100mm/s.

The dry air is produced as follows. Refrigerants absorb heat in the cold exchanger and release heat in the heat exchanger under the influence of the compressor. Normal temperature air extracted by the air blower is first cooled to precipitate condensed water in the cold exchanger wherein the temperature for cooling is between 0 °C and 15 °C . And then the temperature of the air is raised to a range of 0°C to 90°C in the heat exchanger. Accordingly, the unsaturation of the air is raised, resulting in the dry air.

Said aerobically exothermic reaction is a process that under oxidative conditions aerobic bacteria in the sludge decompose organics into carbon dioxide and water, accompanying with heat releasing. With the steps of crushing and dispersing of sludge filter cakes and blowing dry air, the heat aerobically released from the sludge is in a range of from 0 to 20 KJ·kg⁻¹·h⁻¹, depending on the content of organics in the sludge.

The aerobically exothermic drying of the sludge itself is a sterilizing process against pathogens in the sludge. Additional physically or chemically sterilizing of sludge granules, which is selected from the group consisting of ultraviolet sterilization, ozone sterilization, high chlorine- or high oxygen- materials sterilization as well as other sterilization, may be further adopted to meet the needs of sludge reclamation.

In the step of washing the tail gas, the condensed water discharged from the cold exchanger is preferably used as the source of water, and with supplementary from external water resources.

In the step of further pulverizing the dried sludge granules during the conveying of the dried sludge granules with the screw crushing device by making the materials crushing and rubbing with each other, the device may have a single screw or a set of two or more screws.

Also provided is an apparatus for low temperature air-drying sludge filter cakes, comprising means for pre-crushing sludge filter cakes, means for air-drying the sludge and means for producing dry air. The means for pre-crushing sludge filter cakes is disposed above the means for air-drying sludge. A feed inlet is disposed over the means for pre-crushing sludge filter cakes. The means for air-drying the sludge include a conveyor belt and a driving device. Both ends of the conveyor belt connect the respective driving devices. The conveyor belt is arranged in multiple-layer mode. The means for discharging and crushing is disposed blow the bottom layer of the conveyor belt. A discharging outlet is at the end of the means for discharging and crushing. The means for producing dry air is disposed over the means for air-drying the sludge and connected with the air outlets in the means for air-drying the sludge through air channels.

The conveyor belt mentioned above may have four or more layers.

A sludge thickness regulator may be set at the starting end of the first layer of the conveyor belt.

Ultraviolet lamps may be set on the walls corresponding to the ends of the conveyor belt.

Compared with the prior art technologies, this invention has following advantages. First, the crushing and dispersing of the sludge filter cakes into a layer of sludge granules before the drying step leads to sludge granules having high specific surface area, which are more efficient in heat conducting and mass transferring when drying and thereby make the drying less energy consumption. Second, the crushed sludge granules experience aerobically exothermic reactions, which not only decrease the energy consumption for drying, but also accelerate drying speed and achieve the sludge deodorization. Third, during the drying, the sludge granules move at a relatively slower speed, producing no dust, which makes the process more stable and safer. Fourth, due to the low temperature drying of sludge leads to no thermal cracking reaction of organics, the dried tail gases after washing step may meet the environment-friendly discharging standards. Fifth, the means for discharging and crushing has additional function of crushing, which may loosen resulting sludge granules, making them easier for reclamation.

### BRIEF DESCRIPTION OF THE DRAWINGS

Figure 1 is a schematic flowchart illustrating the method of aerobically air-drying sludge filter cakes in accordance with one embodiment of this invention.
Figure 2 is a schematic illustration of the apparatus for aerobically air-drying sludge filter cakes in accordance with one embodiment of this invention.
Figure 3 is a schematic illustration of the cross section at A-A of the apparatus for aerobically air-drying sludge filter cakes in accordance with one embodiment of this invention.
Figure 4 is a schematic illustration of the cross section at B-B of the apparatus for aerobically air-drying sludge filter cakes in accordance with one embodiment of this invention.
Figure 5 is an enlarged illustration of the C section of the apparatus for aerobically air-drying sludge filter cakes in accordance with one embodiment of this invention.

In the figures, the reference sign 1 represents the feed inlet; the reference sign 2 represents the means for crushing and dispersing sludge filter cakes; the reference sign 3 represents the induced draft fan; the reference sign 4 represents the overflow orifice; the reference sign 5 represents the tail gas washing device; the reference sign 6 represents the heat exchanger; the reference sign 7 represents the air blower; the reference sign 8 represents the cold exchanger; the reference sign 9 represents the air inlet; the reference sign 10 represents the condensed water pump; the reference sign 11 represents the dry-air inlet; the reference sign 12 represents the conveyor belt; the reference sign 13 represents the sludge thickness regulator; the reference sign 14 represents the mudguard; the reference sign 15 represents the driving device; the reference sign 16 represents the means for discharging and crushing; the reference sign 17 represents the discharging outlet; the reference sign 18 represents the dry air channel; the reference sign 19 represents the ultraviolet lamps; the reference sign 20 represents the mesh belt; and the reference sign 21 represents the connecting pin.

### DESCRIPTION OF THE INVENTION

The method and apparatus for aerobically air-drying sludge filter cakes are described in the following section of this specification by making reference to the drawing figures and the illustrated examples.

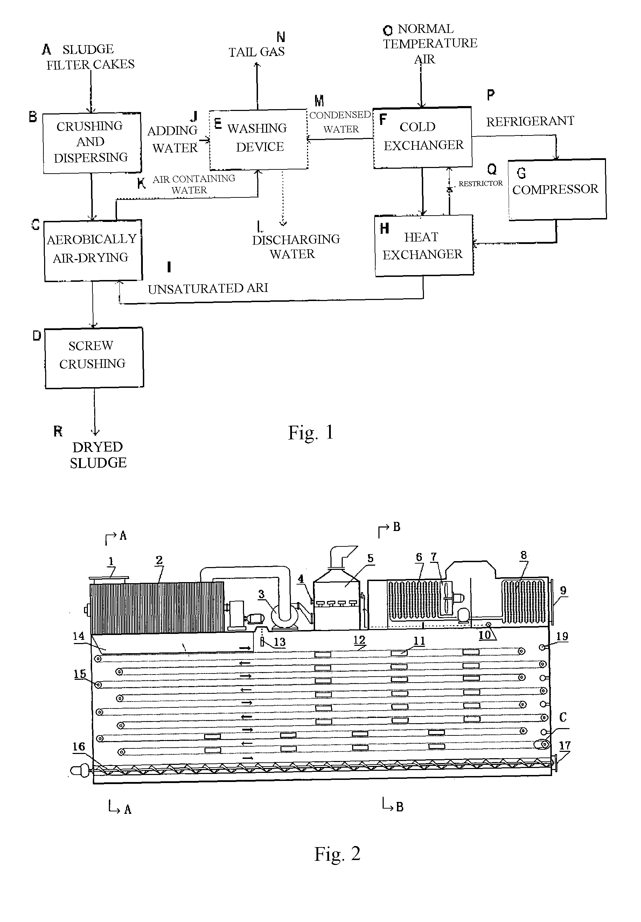

The method for aerobically air-drying sludge filter cakes as showed in figure 1 comprises steps of:
(1) crushing and dispersing the sludge filter cakes into a layer of sludge granules to enlarge the specific surface area of the sludge. The above crushing and dispersing of the sludge filter cakes is accomplished by overturning the sludge filter cakes with a moisture content of 50% to 70% in a porous or interstitial cage and crushing the sludge filter cakes via the attrition and collision therebetween. The sludge granules with external diameters less than those of the pore or the gap distances of the cage breakthrough the cage and thereby the step of the crushing and dispersing of sludge filter cakes is accomplished. The diameters of the pore or the gap distances are set between 3mm and 30mm. The resulting sludge granules within the range, when free settled, have a relatively small bulk density, which may facilitate the gas in and out. The overturning of sludge filter cakes in the cage may be driven by the screw inside the cage or the rotation of the cage per se. The speed of overturning sludge filter cakes in the cage is adjusted according to moisture content of sludge filter cakes and output remand according to the following regulars: ○ ,1. The higher moisture content of sludge filter cakes is, the lower the overturning speed is, and vice versa. The most importance is to minimize the destruction of the capillary channels already formed inside the sludge filter cakes by shear stress, so as to keep sludge granules in a relatively loose state and having larger specific surface area to benefit the subsequent aerobically air-drying process. ○ ,2. The higher the overturning speed is, the more output the sludge crushing and dispersing apparatus has, and vice versa. Preferably, the overturning speed during the crushing and dispersing of sludge filter cakes is that the linear velocity at the outermost radial point is between 5mm/s and 100mm/s.
(2) blowing with positive pressure dry air at a certain temperature into the layer of sludge granules moving at low speed or overturned so that the sludge granules experience aerobically exothermic reactions, which make moisture rapidly evaporated from sludge granules and moved to the dry air by mass transferring under the effect of both the external heat and internal heat. Said aerobically exothermic reaction is a process that under oxidative conditions aerobic bacteria in the sludge decompose organics into carbon dioxide and water, accompanying with heat releasing. With the steps of crushing and dispersing of sludge filter cakes and blowing dry air, the heat aerobically released from the sludge is in a range of from 0 to 20 KJ·kg⁻¹·h⁻¹, depending on the content of organics in the sludge. The dry air is produced as follows. Refrigerants absorb heat in the cold exchanger and release heat in the heat exchanger under the influence of the compressor. Normal temperature air extracted by the air blower is first cooled to precipitate condensed water in the cold exchanger wherein the temperature for cooling is between 0°C and 15°C. And then the temperature of the air is raised to a range of 0°C to 90°C in the heat exchanger. Accordingly, the unsaturation of the air is raised, resulting in the dry air. A restrictor is disposed between the cold exchanger and the heat exchanger, which may be a throttle valve. Condensed water produced in the cold exchanger is pumped into the tail gas washing device.
(3) Physically or chemically sterilizing the sludge granules moving at low speed or overturned. Though the aerobically exothermic drying of the sludge itself is a sterilizing process against pathogens in the sludge, additional physically or chemically sterilizing of sludge granules, which is selected from the group consisting of ultraviolet sterilization, ozone sterilization, high chlorine or high oxide materials sterilization as well as other sterilization, may be further adopted to meet the needs of sludge reclamation.
(4) Pumping out tail gas by negative pressure from the layer of sludge granules, washing and then discharging. The source of water for washing may preferably be the condensed water discharged from the cold exchanger. External water resources may be used to provide supplementary.
(5) Further pulverizing the dried sludge granules to meet the reclamation requirements.

The further pulverizing is accomplished during the conveying of the dried sludge granules with a screw crushing device by making the materials crushing and rubbing with each other. The device may have a single screw or a set of two or more screws. The reclamation mentioned above may be use as fertilizers, in bricks manufacture, as fuels and as fillers.

### Example 1

The method for aerobically air-drying sludge filter cakes was carried out, which includes the steps of:
(1) Crushing of sludge filter cakes with a moisture content of 70%~50% into sludge granules, which were fell onto the moving conveyor belt and thereby dispersed into a layer of sludge granules, wherein said crushing of sludge filter cakes was done by the means for crushing sludge filter cakes mentioned below.
(2) Blowing with positive pressure dry air at a certain temperature into the layer of sludge granular on the conveyor belt moving at low speed. The dry air was produced by subjecting normal temperature air to condensing and separating moisture in the cold exchanger and warming up in the heat exchanger. The dry air had a temperature of 0~90°C. The dry air was blow through the air channels to the dry air inlets which are disposed between the steel meshes of the upper and lower layers of the conveyor belt. Upon crossing from the bottom and the top of sludge granules, the dry air provided oxygen to aerobic reactions as well as dewatered the sludge granules by taking away moisture therefrom. The conveyor belt was designed to have several layers, on the top layer of which a sludge granules thickness regulator was set. Thickness of sludge granules on the conveyor belt was regulated to a range of between 10mm and 500mm. The linear velocity of the conveyor belt was 1 mm/s-10mm/s The entire residence time of sludge granules on the conveyor belt was 5h-50h. The sludge granules sent to the end of the upper layer of the conveyor belt fell down onto the lower layer and moved towards the opposite direction.
(3) Physically or chemically sterilizing sludge granules on the conveyor belt. Preferably, the sludge granules were sterilized by radiation by ultraviolet lamps when the sludge granules falling down to the lower layer.
(4) Pumping out tail gas by negative pressure from the layer of sludge granules, washing and then discharging. The source of water for washing was the condensed water discharged from the cold exchanger. External water resources were used to provide supplementary.
(5) When sending to the end, the sludge granules on the bottom layer of the conveyor belt falling down to the spiral crushing device below the bottom layer of the conveyor belt to be further crushed.

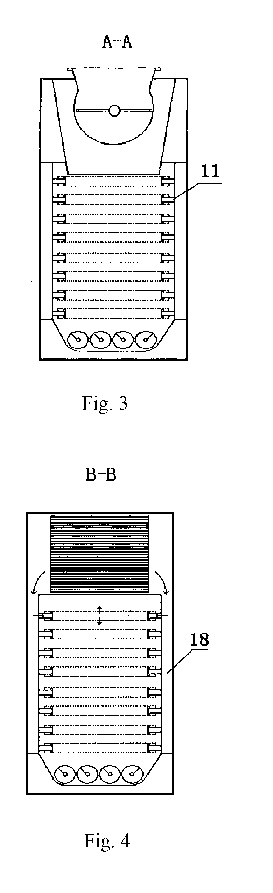

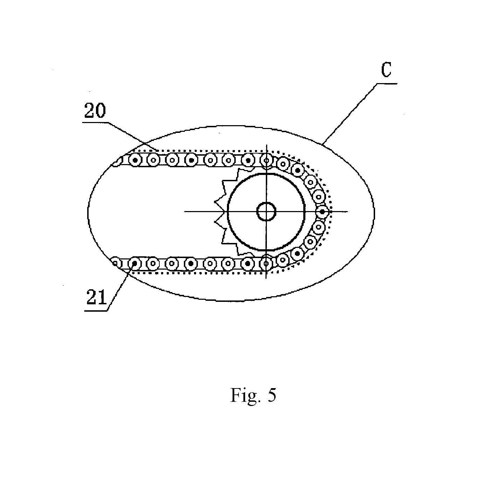

The above was carried out in an apparatus for aerobically air-drying sludge filter cakes. As showed in figure 2, 3, 4 and 5, the apparatus includes the means for crushing and dispersing sludge filter cakes 2, the means for aerobically air-drying the sludge, the means for discharging and crushing, the means for producing dry air, the means for collecting and washing tail gas.

The means for crushing and dispersing sludge filter cakes 2 was disposed over the means for aerobically air-drying the sludge. An inlet 1 for sludge filter cakes was disposed over the means for crushing and dispersing sludge filter cakes. In the means for crushing and dispersing sludge filter cakes 2, sludge filter cakes were crushed to sludge granules. Then the sludge granules fell down through a discharging port onto the top layer of the conveyor belt 12 within the means for aerobically air-drying the sludge. Beneath the discharging port of the means for crushing and dispersing sludge filter cakes 2, a mudguard 14 was set on the beginning of the top layer of conveyor belt 12 to make sure that all the sludge granules from the discharging port were falling onto the top layer of the conveyor belt 12. The means for crushing and dispersing sludge filter cakes 2 comprised a screw, a cage, a screw driving motor and a house. The screw driving motor was connected to the screw with a connector. There were crushing blades on the screw. The screw was surrounded by the cage which was surrounded by the house. The cage was porous or interstitial. The screw was set on a bearing which is disposed on main supports. The feed inlet was on the middle of the house. The cage was fixed on the main supports by a connecting support. The diameter of the pore or the gap distances of the cage was between 3mm and 30mm and the interstices area ratio or the porosity was 50%-99%. The house was a conical shell for collecting materials. The crushing blades were arranged on the end of the screw in an angle which causes the reversing propulsion so that sludge filter cakes were driven to the crushing cage to make sure that all the sludge filter cakes were crushed and brokethrough from the pores or the interstices on the cage. A cage cleaning device was set on the crushing blades and prevented the pores or the interstices on the cage from being blocked. The crushing blades had an outmost point linear velocity of 5mm/s-100mm/s.

The means for aerobically air-drying the sludge comprised conveyor belt 12, driving device 15, sludge thickness regulator 13 and ultraviolet lamps 19. Both ends of the conveyor belt were connected to driving device 15, which drove conveyor belt 12 through an axle and a speed regulating motor. The mesh belt 20 of the conveyor belt 12 was set on chains which were linked by connecting pins 21. A sludge thickness regulator 13 was set on top of the conveyor belt 12 to regulate the thickness of sludge granules on the conveyor belt 12, for high drying efficiency. Thickness of sludge granules was controlled between 10mm and 500mm. Conveyor belt 12 was layered from top to bottom, for example as four or more layers. One layer of the conveyor belt moved towards the opposite direction of the adjacent layers. The conveyor belt was made from any materials that were able to bear and ventilate, such as steel mesh, filter cloth and/or plastic mesh. The lower layer of the conveyor belt exceeded the upper one at one end so that sludge sent to the end of the upper layer of the conveyor belt fell down onto the lower one that was moving in the opposite direction. During sludge falling down, they were exposed to and sterilized by ultraviolet lamps 19 that were set on the wall opposite to the ends of each layer of the conveyor belt. The means for discharging and crushing 16 was disposed on the bottom of the means for air-drying the sludge. The discharging outlet 17 was disposed on the end of the means for discharging and crushing 16. Dried sludge on the bottom layer of the conveyor belt 12 fell down onto the means for discharging and crushing 16, crushed when advancing along the means for discharging and crushing 16 and discharged from the discharging outlet 17 at last. The means for discharging and crushing 16 could be a twin screw conveyor with at least one crushing screw. Preferably, the means for discharging and crushing 16 had two crushing screws.

The means for producing dry air was disposed over the means for aerobically air-drying the sludge. The means for producing dry air comprised a cold exchanger, a compressor, an air blower and a heat exchanger. Air blower 7 was between the cold exchanger 8 and the heat exchanger 6. The cold exchanger 8 was connected to the air inlet 9. Water condensed in the cold exchanger 8 was separated by a condensate separator, collected and then sent to the tail gas washing device 5 by condensed water pump 10. Through dry-air channel 18, the dry air was sent to the dry-air inlet 11 within conveyor belt 12 to dry the sludge granules on the conveyor belt 12. Dry-air inlet 11 could blow upward and downward.

The means for collecting and washing tail gas was disposed over the means for aerobically air-drying the sludge. The means for collecting and washing tail gas included induced draft fan 3 and tail gas washing device 5. Induced draft fan 3 connected at its air inlet to the means for crushing and dispersing sludge filter cakes 2 and at its outlet to tail gas washing device 5 by the air channels. Washed tail gas was discharged from the exhaust pipe on the top of tail gas washing device 5, while the waste water was pumped out from overflow orifice 4 in the middle of tail gas washing device 5.

Sludge filter cakes with moisture content of 70%-50% were feed from the feed inlet 1 to the means for crushing and dispersing sludge filter cakes 2. Crushed sludge granules fell onto the steel mesh of the conveyor belt 12, whose linear velocity was set between 1 mm/s ~ 10 mm/s. Thickness of the sludge granules on the steel mesh of the conveyor belt 12 was controlled in a range of 10 mm ~ 500 mm by the sludge thickness regulator 13. Sludge granules sent to the end of a layer of the conveyor belt fell down onto the lower one that was moving in the opposite direction, during which falling the sludge granules was exposed to and sterilized by the ultraviolet lamps 19 set on the wall opposing to the ends of each layer of the conveyor belt, which was repeated. At last sludge fell down onto the means for discharging and crushing 16, crushed when advancing, and discharged from the discharging outlet 17 set at the end of the means for discharging and crushing 16. By adjusting the speed of the conveyor belt, residence time of sludge granules in the means for aerobically air-drying the sludge was controlled in 5h-50h and the moisture content of the resulting materials was controlled in 50%-5%.

Normal temperature air was sent through the air inlet 9 to the cold exchanger 8 in the means for producing dry air where its moisture was condensed and separated, then pumped by air blower 7 to the heat exchanger 6 where it was warmed up and became the unsaturated dry air. The temperature of the dry air was adjusted to a range of from 0 to 90°C. Condensed water was discharged from the condensate separator in the cold exchanger 8 and then sent by the condensed water pump 10 to tail gas washing device 5 as the water source for washing. Through air channels 18, the dry air was sent to each dry air outlet 11 which was between the upper and lower steel mesh of the conveyor belt 12, to provide dried and aerobic air for the sludge granules thereon. There were several dried air outlets 11 over each layer of the conveyor belt 12. Sludge granules were subjected to a heat conducting and mass transferring with the dry air and got dewatered. Through the induced draft fan 3, the dried tail gas was collected by the means for crushing and dispersing sludge filter cakes 2, pumped into the tail gas washing device 5 and discharged after bubbling washing. The sewage in the washing was pumped into the sewage pipe from the overflow orifice 4.

### Example 2

Sludge filter cakes with a moisture content of 70% were feed from the feed inlet to the means for crushing and dispersing sludge filter cakes 2. Crushed sludge granules fell to the steel mesh of the conveyor belt 12 in the means for aerobically air-drying the sludge. The linear velocity of the conveyor belt 12 was set at 1.5 mm/s. Thickness of the sludge granules on the conveyor belt 12 was about 50 mm. Sludge granules sent to the end of a layer of the conveyor belt fell down onto the lower one that was moving in the opposite direction, during which falling the sludge granules was exposed to and sterilized by the ultraviolet lamps 19, which was repeated. The temperature of the dry air was 62°C. The dry air was sent through air channels 18 to each dry air outlet 11 which was between the upper and lower layers of the steel mesh conveyor belt 12, to provide dry air for the sludge granules thereon. The dried sludge granules fell down onto the means for discharging and crushing 16 which was disposed blow the means for aerobically air-drying the sludge, crushed when advancing, and discharged from the discharging outlet 17 set at the end of the means for discharging and crushing 16. The moisture of the resulting materials was 38%. The residence time of sludge granules in the means for aerobically air-drying the sludge was 35h. After storing for 3 days, moisture content of packed dried sludge decreased to 35%.

### Example 3

Sludge filter cakes with moisture content of 62% were feed from the feed inlet to the means for crushing and dispersing sludge filter cakes 2. Crushed sludge granules fell to the steel mesh of the conveyor belt 12 in the means for aerobically air-drying the sludge. The linear velocity of the conveyor belt 12 was set at 3mm/s. Thickness of the sludge granules on the steel mesh of the conveyor belt 12 was about 80 mm. Sludge granules sent to the end of a layer of the conveyor belt fell down onto the lower one that was moving in the opposite direction, during which falling the sludge granules was exposed to and sterilized by the ultraviolet lamps 19, which was repeated. The temperature of the dry air was 55°C. The dry air was sent through air channels 18 to each dry air outlet 11 which was between the upper and lower layers of the steel mesh conveyor belt 12, to provide dry air for the sludge granules thereon. The dried sludge granules fell down onto the means for discharging and crushing 16 which was disposed blow the means for aerobically air-drying the sludge, crushed when advancing, and discharged from the discharging outlet 17 set at the end of the means for discharging and crushing 16. The moisture of the resulting materials was 33%. The residence time of sludge granules in the means for aerobically air-drying the sludge was 28h.

### Example 4

Sludge filter cakes with moisture content of 54% were feed from the feed inlet to the means for crushing and dispersing sludge filter cakes 2. Crushed sludge granules fell to the steel mesh of the conveyor belt 12 in the means for aerobically air-drying the sludge. The linear velocity of the conveyor belt 12 was set at 5 mm/s. Thickness of the sludge granules on the steel mesh of the conveyor belt 12 was about 110 mm. Sludge granules sent to the end of a layer of the conveyor belt fell down onto the lower one that was moving in the opposite direction, during which falling the sludge granules was exposed to and sterilized by the ultraviolet lamps 19, which was repeated. The temperature of the dry air was 52°C. The dry air was sent through air channels 18 to each dry air outlet 11 which was between the upper and lower layers of the steel mesh conveyor belt 12, to provide dry air for the sludge granules thereon. The dried sludge granules fell down onto the means for discharging and crushing 16 which was disposed blow the means for aerobically air-drying the sludge, crushed when advancing, and discharged from the discharging outlet 17 set at the end of the means for discharging and crushing 16. The moisture of the resulting materials was 31 %. The residence time of sludge granules in the means for aerobically air-drying the sludge was 22h.

## Claims

1. A method for aerobically air-drying sludge cakes, **characterized by** comprising the steps of:
(1) crushing and dispersing sludge filter cakes into a layer of sludge granules,
(2) blowing with positive pressure dry air into the layer of sludge granules moving at low speed or overturned so that the sludge granules experience aerobically exothermic reactions, which make moisture rapidly evaporated from sludge granules and moved to the dry air by mass transferring under the effect of both the external heat and internal heat,
(3) physically or chemically sterilizing the sludge granules moving at low speed or overturned,
(4) pumping out tail gas by negative pressure from the layer of sludge granules, washing and then discharging, and
(5) further pulverizing the dried sludge granules to reach the reclamation requirements.

2. The method for aerobically air-drying sludge cakes according to claim 1 **characterized in that** the crushing and dispersing of the sludge filter cakes is accomplished by overturning the sludge filter cakes with a moisture content of 50% to 70% in a porous or interstitial cage so that the sludge filter cakes are crushed via the attrition and collision therebetween and the sludge granules with external diameters less than those of the pore or the gap distances of the cage breakthrough the cage, wherein the diameters of the pore or the gap distances are set between 3mm and 30mm..

3. The method for aerobically air-drying sludge cakes according to claim 1 **characterized in that** the cage is overturned with the linear velocity at the outermost radial point of between 5mm/s and 100mm/s.

4. The method for aerobically air-drying sludge cakes according to claim 1 **characterized in that** the dry air is produced by
subjecting refrigerants to absorbing heat in a cold exchanger and releasing heat in a heat exchanger under the influence of the compressor, and
subjecting the normal temperature air extracted by the air blower to cooling to precipitate condensed water in the cold exchanger wherein the temperature for cooling is between 0°C and 15°C and then to raising the temperature to a range of 0°C to 90°C in the heat exchanger to obtain the unsaturated dry air.

5. The method for aerobically air-drying sludge cakes according to claim 1 **characterized in that** in step (3), the physically sterilizing is ultraviolet sterilization, and the chemically sterilizing is ozone sterilization and/or high chlorine- or high oxygen-material sterilization.

6. The method for aerobically air-drying sludge cakes according to claim 1 **characterized in that** in step (4), the water source for washing is the condensed water discharged from the cold exchanger.

7. The method for aerobically air-drying sludge cakes according to claim 1 **characterized in that** in step (5), the further pulverizing is accomplished during the conveying of the dried sludge granules with a screw crushing device by making them crushing and rubbing with each other, wherein the screw crushing device comprises a single screw or a set of two or more screws.

8. An apparatus for low temperature air-drying filter cakes, **characterized by** comprising means for pre-crushing sludge filter cakes, means for air-drying the sludge and means for producing dry air,
wherein the means for pre-crushing sludge filter cakes is disposed above the means for air-drying sludge, with a feed inlet disposed over the means for pre-crushing sludge filter cakes,
wherein the means for air-drying the sludge include a conveyor belt and a driving device, wherein both ends of the conveyor belt connect the respective driving devices, the conveyor belt is arranged in multiple-layer mode, the means for discharging and crushing is disposed blow the bottom layer of the conveyor belt with a discharging outlet at the end of the means for discharging and crushing, and
wherein the means for producing dry air is disposed over the means for air-drying the sludge and connected with the air outlets in the means for air-drying the sludge through air channels.

9. The apparatus for low temperature air-drying filter cakes according to claim 8 **characterized in that** the conveyor belt is arranged in four or more layers and ultraviolet lamps are set on the wall opposite to the ends of each layer of the conveyor belt.

10. The apparatus for low temperature air-drying filter cakes according to claim 8 **characterized in that** a sludge thickness regulator is set at the starting end of the first layer of the conveyor belt.
